# EUROPÄISCHE PATENTANMELDUNG

(11) **EP 3 660 607 A1**
(43) Veröffentlichungstag der Anmeldung: **03.06.2020**
(21) Anmeldenummer: 18209532.3
(22) Anmeldetag: 30.11.2018
(51) Int. Cl.: G05B 19/4062, G05B 23/02, H02P 29/02, H02P 23/14

(54) **VERFAHREN UND SYSTEM ZUR ÜBERWACHUNG DES BETRIEBES MINDESTENS EINER ANTRIEBSKOMPONENTE**

(71) Anmelder: Siemens Aktiengesellschaft, 80333 München (DE)
(72) Erfinder: Winter, Jens, 37235 Hessisch Lichtenau (DE)

(57) **Zusammenfassung**

Die Erfindung betrifft ein Verfahren zur Überwachung des Betriebes mindestens einer Antriebskomponente (4). Um die Schnelligkeit und Sicherheit der Überwachung zu verbessern wird vorgeschlagen, dass Daten, welche die mindestens eine Antriebskomponente (4) und/oder einen Betrieb der mindestens einen Antriebskomponente (4) betreffen, an eine zentrale IT-Infrastruktur (10) übertragen werden, wobei die übertragenen Daten innerhalb der zentralen IT-Infrastruktur (10) einem Modell (14) der mindestens einen Antriebskomponente (4) zugeordnet werden, wobei dem Modell (14) der mindestens einen Antriebskomponente (14) ein Modell (16) mindestens einer virtuellen Komponente zugeordnet wird, wobei mit Hilfe der Modelle (14, 16) ein Betriebszustand der Antriebskomponente (4) ermittelt wird.

## Beschreibung

Die Erfindung betrifft ein Verfahren zur Überwachung des Betriebes mindestens einer Antriebskomponente.

Des Weiteren betrifft die Erfindung ein System zur Überwachung des Betriebes mindestens einer Antriebskomponente.

Darüber hinaus betrifft die Erfindung ein Computerprogramm zur Durchführung eines derartigen Verfahrens bei Ablauf in einer zentralen IT-Infrastruktur.

Überdies betrifft die Erfindung ein Computerprogrammprodukt mit einem derartigen Computerprogramm.

Im Rahmen der Digitalisierung und der Verwendung von, insbesondere cloudbasierten offenen, IoT(Internet of Things)-Systemen, werden Daten von verschiedenartigen Komponenten aufgenommen und gespeichert. Die Daten zu den jeweiligen Komponenten sind beispielsweise listenartig angeordnet. Eine derartige Anordnung spiegelt nicht den funktionalen Zusammenhang wider.

Insbesondere für ein antriebstechnisches System ist eine funktionale Verknüpfung der Komponentendaten eines Antriebsstrangs sinnvoll, um Messwerte, Fehlerdiagnosen und funktionale Zusammenhänge, beispielsweise von Problemen oder Störfällen, schnell und sicher zu ermitteln. Eine sofortige und umfangreiche Vergleichbarkeit von Messdaten erhöht die Diagnosefähigkeit und das Erkennen von Korrelationen zwischen Fehlern einzelner Komponenten im Gesamtsystem.

Die Offenlegungsschrift EP 3 322 088 A1 beschreibt ein Verfahren zum Überwachen des Betriebes einer elektrischen rotierenden Maschine mit einem Rotor, einem Stator und einem Maschinengehäuse, in dem der Rotor und der Stator aufgenommen sind. Um eine Durchführung des Verfahrens ohne konstruktive Änderungen an der elektrischen rotierenden Maschine zu ermöglichen, wird vorgeschlagen, dass außerhalb des Maschinengehäuses eine erste physikalische Größe des Stators und eine zweite physikalische Größe des Rotors gemessen wird, wobei aus der ersten physikalischen Größe und der zweiten physikalischen Größe mindestens eine Zustandsgröße der elektrischen rotierenden Maschine ermittelt wird.

Der Erfindung liegt die Aufgabe zugrunde, ein Verfahren zur Überwachung des Betriebes mindestens einer Antriebskomponente anzugeben, welches eine verbesserte Schnelligkeit und Sicherheit bietet.

Die Aufgabe wird durch ein Verfahren zur Überwachung des Betriebes mindestens einer Antriebskomponente gelöst, wobei Daten, welche die mindestens eine Antriebskomponente und/oder einen Betrieb der mindestens einen Antriebskomponente betreffen, an eine zentrale IT-Infrastruktur übertragen werden, wobei die übertragenen Daten innerhalb der zentralen IT-Infrastruktur einem Modell der mindestens einen Antriebskomponente zugeordnet werden, wobei dem Modell der mindestens einen Antriebskomponente ein Modell mindestens einer virtuellen Komponente zugeordnet wird, wobei mit Hilfe der Modelle ein Betriebszustand der Antriebskomponente ermittelt wird.

Die Aufgabe wird darüber hinaus durch ein System zur Überwachung des Betriebes mindestens einer Antriebskomponente gelöst, welches eine Vorrichtung zur Übertragung von Daten, welche die mindestens eine Antriebskomponente und/oder einen Betrieb der mindestens einen Antriebskomponente betreffen, an eine zentrale IT-Infrastruktur, ein Modell der mindestens einen Antriebskomponente innerhalb der zentralen IT-Infrastruktur, welchem die übertragenen Daten der mindestens einen Antriebskomponente zugeordnet sind, ein Modell mindestens einer virtuellen Komponente, welches dem Modell der mindestens einen Antriebskomponente zugeordnet ist, und eine Auswerteeinheit, die dafür vorgesehen ist, mit Hilfe der Modelle einen Betriebszustand der Antriebskomponente zu ermitteln, aufweist.

Die Aufgabe wird des Weiteren durch ein Computerprogramm zur Durchführung eines derartigen Verfahrens bei Ablauf in einer zentralen IT-Infrastruktur gelöst.

Die Aufgabe wird überdies durch ein Computerprogrammprodukt mit einem derartigen Computerprogramm gelöst.

Die in Bezug auf das Verfahren nachstehend angeführten Vorteile und bevorzugten Ausgestaltungen lassen sich sinngemäß auf das System, das Computerprogramm und das Computerprogrammprodukt übertragen.

Der Erfindung liegt die Überlegung zugrunde, Daten, welche mindestens eine Antriebskomponente in einem Antriebssystem und/oder einen Betrieb der mindestens einen Antriebskomponente betreffen, möglichst schnell und sicher zu interpretieren, indem die Daten an eine zentrale IT-Infrastruktur übertragen und dort einem korrespondierenden Modell zugeordnet werden. Ein Antriebssystem weist beispielsweise mindestens ein Schutzsystem, eine Sicherung, einen Transformator, einen Filter, einen Umrichter, einen Motor, ein Getriebe und/oder eine Last auf. Eine zentrale IT-Infrastruktur ist beispielsweise mindestens ein lokales Computersystem und/oder mindestens ein, insbesondere cloudbasiertes offenes, IoT-System. Die zentrale IT-Infrastruktur stellt Speicherplatz, Rechenleistung und/oder Anwendungssoftware bereit. In einem IoT-System werden Speicherplatz, Rechenleistung und/oder Anwendungssoftware als Dienstleistung über das Internet zur Verfügung gestellt. Das korrespondierende Modell bildet insbesondere ein technisches Verhalten der Antriebskomponente ab. Ferner wird dem Modell der mindestens einen Antriebskomponente ein Modell mindestens einer virtuellen Komponente zugeordnet. Durch die Zuordnung wird eine funktionale Verknüpfung zwischen den Modellen hergestellt. Insbesondere bildet das Modell der virtuellen Komponente das technische Verhalten einer Komponente nach, welche mit der Antriebskomponente elektrisch oder mechanisch verbunden ist. Das Modell der virtuellen Komponente wird beispielsweise von einem Benutzer oder automatisch zugeordnet. Beispielsweise ist die Antriebskomponente ein Generator und das Modell der virtuellen Komponente bildet das Verhalten einer Turbine ab. Mit Hilfe einer Korrelation der Modelle wird ein Betriebszustand der Antriebskomponente ermittelt. Durch die funktionale Verknüpfung der Modelle und die Korrelation wird die Zuverlässigkeit bei einer Fehlerdiagnose verbessert und eine Reaktionszeit bei auftretenden Fehlern wird verkürzt. Ferner wird eine Wartung der mindestens einen Antriebskomponente vereinfacht.

In einer bevorzugten Ausführungsform umfassen die Daten, welche die mindestens eine Antriebskomponente betreffen, eine individuelle Produktkennzeichnung. Eine individuelle Produktkennzeichnung ist beispielsweise eine Seriennummer, welche nicht nur den Produkttyp, sondern eine möglicherweise individualisierte Ausgestaltung eines Produkttyps kennzeichnet. Durch eine individuelle Produktkennzeichnung ist in der zentralen IT-Infrastruktur ein Modell der jeweiligen Antriebskomponente mit zumindest einem individualisierten technischen Parameter hinterlegbar, sodass die Antriebskomponente durch das Modell sehr präzise abbildbar ist.

Besonders vorteilhaft wird das Modell der mindestens einen Antriebskomponente anhand der individuellen Produktkennzeichnung automatisch zugeordnet. Beispielsweise ist das Modell einer Seriennummer in einer Datenbank eindeutig zugeordnet. Durch die automatische Zuordnung wird die Datenverarbeitung beschleunigt und die Bedienfreundlichkeit erhöht.

Bei einer weiteren vorteilhaften Ausgestaltung wird bei der Ermittlung des Betriebszustandes der Antriebskomponente zumindest eine Kennlinie verwendet. Eine Kennlinie ist dem Modell einer Antriebskomponente und/oder dem Modell zumindest einer weiteren, insbesondere virtuellen, Komponente zugeordnet. Insbesondere bildet eine Kennlinie technische Eigenschaften der Antriebskomponente in Abhängigkeit von zumindest einem Parameter ab. Beispielsweise wird für eine Asynchronmaschine eine Drehzahl-Drehmomentkennlinie eingesetzt. Optional wird eine Kennlinienschar verwendet, welche eine mehrdimensionale Parameterabhängigkeit abbildet. Durch die Verwendung von Kennlinien ist ein komplexes technisches Verhalten einer Komponente schnell und zuverlässig ermittelbar.

In einer bevorzugten Ausführungsform wird zumindest ein Teil der Daten, welche den Betrieb der mindestens einen Antriebskomponente betreffen, von zumindest einem Sensor ermittelt. Durch die Verwendung von Sensoren wird die Zuverlässigkeit der Überwachung der mindestens einen Antriebskomponente im Antriebssystem verbessert. Insbesondere eine Fehlerdiagnose wird erleichtert.

Besonders vorteilhaft werden vom zumindest einen Sensor eine Temperatur, eine Schwingung und/oder ein Magnetfeld gemessen. Derartige Sensorik ist ohne konstruktive Änderungen der Antriebskomponente verwendbar und ermöglicht eine zuverlässige und genaue Messung.

Bei einer bevorzugten Ausgestaltung wird anhand der Daten des zumindest einen Sensors ein Istwert für zumindest einen Betriebsparameter ermittelt, wobei anhand einer Korrelation der Modelle ein Sollwert für den zumindest einen Betriebsparameter ermittelt wird, wobei aus dem Sollwert und dem Istwert des zumindest einen Betriebsparameters ein Betriebszustand der Antriebskomponente ermittelt wird. Durch Korrelation der funktional verknüpften Modelle unter Einbezug von gemessenen Sensordaten wird die Zuverlässigkeit der Überwachung des Betriebes der Antriebskomponente verbessert.

Besonders vorteilhaft wird der Betriebszustand der Antriebskomponente mit Hilfe zumindest einer Vergleichsoperation ermittelt. Beispielsweise werden mindestens ein Sollwert und ein Istwert zur Ermittlung eines Betriebszustandes miteinander verglichen. Eine derartige Vergleichsoperation ist einfach zu implementieren, wobei ein fehlerhafter Betriebszustand schnell und zuverlässig feststellbar ist.

In einer weiteren vorteilhaften Ausgestaltung ist mindestens eine Antriebskomponente als elektrische rotierende Maschine ausgeführt, wobei die Daten, welche den Betrieb der mindestens einen elektrischen rotierenden Maschine betreffen, zumindest eine Drehzahl und/oder ein Drehmoment umfassen. Eine Drehzahl und/oder ein Drehmoment haben sich als einfach und zuverlässig erwiesen, um den Betrieb einer elektrischen rotierenden Maschine zu charakterisieren.

Bei einer weiteren vorteilhaften Ausführungsform ist mindestens eine Antriebskomponente als Umrichter ausgeführt, wobei die Daten, welche den Betrieb des mindestens einen Umrichters betreffen, zumindest eine Zwischenkreisspannung und/oder einen Eingangsstrom des Umrichters umfassen. Eine Zwischenkreisspannung und/oder einen Eingangsstrom haben sich als einfach und zuverlässig erwiesen, um den Betrieb eines Umrichters zu charakterisieren.

Besonders vorteilhaft werden die Daten zumindest teilweise von einem optisch lesbaren Code eingelesen. Ein optisch lesbarer Code ist beispielsweise ein Barcode, ein QR-Code oder ein Data-Matrix-Code. Derartige optisch lesbare Codes sind einfach und schnell einlesbar.

In einer bevorzugten Ausführungsform werden die Daten zumindest teilweise über eine Netzwerkschnittstelle an die zentrale IT-Infrastruktur übertragen. Beispielsweise erfolgt die Datenübertragung mittels einer Ethernet-Schnittstelle oder drahtlos über WiFi. Eine Datenübertragung über eine Netzwerkschnittstelle ist einfach und sicher.

In einer weiteren vorteilhaften Ausgestaltung wird zumindest eine den Betriebszustand der Antriebskomponente kennzeichnende Größe grafisch dargestellt. Durch die grafische Darstellung wird die Übersichtlichkeit verbessert, sodass die Reaktionszeit bei auftretenden Fehlern verkürzt wird.

Im Folgenden wird die Erfindung anhand der in den Figuren dargestellten Ausführungsbeispiele näher beschrieben und erläutert.

Es zeigen:
- FIG 1: ein Blockschaltbild einer ersten Ausführungsform eines Systems zur Überwachung des Betriebes einer Antriebskomponente und
- FIG 2: ein Blockschaltbild einer zweiten Ausführungsform eines Systems zur Überwachung des Betriebes einer Antriebskomponente.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

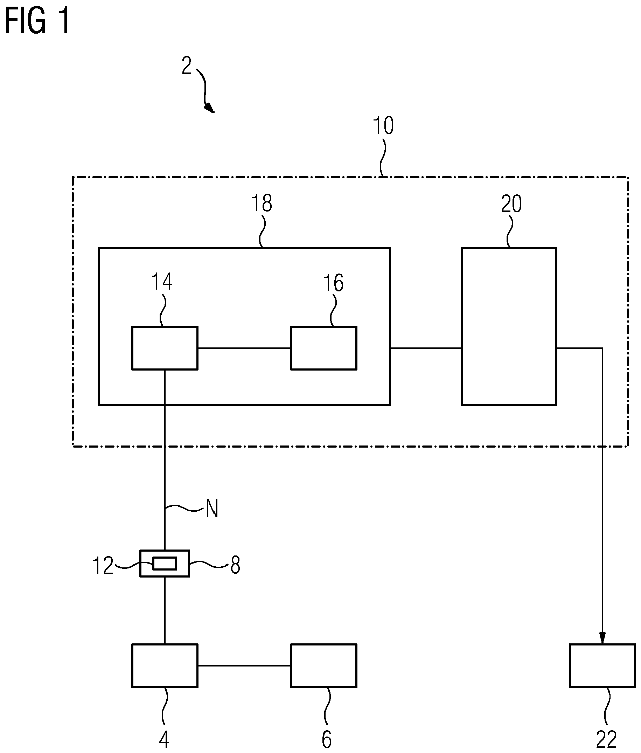

FIG 1 zeigt ein Blockschaltbild eines Systems 2 zur Überwachung des Betriebes einer Antriebskomponente 4. Die Antriebskomponente 4 ist als Motor ausgeführt, der mit einer Lastvorrichtung 6, welche als Pumpe ausgeführt ist, verbunden ist und zum Antreiben der Lastvorrichtung 6 verwendet wird.

Die Antriebskomponente 4 weist eine Vorrichtung 8 auf, welche Daten, die die Antriebskomponente 4 und/oder einen Betrieb der Antriebskomponente 4 betreffen, an eine zentrale IT-Infrastruktur 10 überträgt. Eine derartige Vorrichtung 8 ist beispielsweise eine Sensorbox, welche von der Sensorbox erfasste Daten, insbesondere der zentralen IT-Infrastruktur 10, über eine Kommunikationsschnittstelle zur Verfügung stellt. Die zentrale IT-Infrastruktur 10 ist beispielsweise mindestens ein lokales Computersystem und/oder mindestens ein, insbesondere cloudbasiertes offenes, IoT-System. Die zentrale IT-Infrastruktur 10 stellt Speicherplatz, Rechenleistung und/oder Anwendungssoftware bereit. In einem IoT-System werden Speicherplatz, Rechenleistung und/oder Anwendungssoftware als Dienstleistung über das Internet zur Verfügung gestellt. Daten, welche die Antriebskomponente 4 betreffen, umfassen eine individuelle Produktkennzeichnung, beispielsweise eine Seriennummer. Zusätzlich umfassen Daten, welche einen Betrieb der Antriebskomponente 4 betreffen, Sensordaten, welche von zumindest einem Sensor 12 ermittelt werden. Der Sensor 12 ist als ein Temperatursensor, ein Schwingungssensor und/oder als ein Magnetfeldsensor ausgeführt. Insbesondere wird mit einem Schwingungssensor eine Vibration erfasst, welche von einer Rotordrehzahl abhängige Frequenzanteile enthält, sodass mit Hilfe der Vibrationsdaten beispielsweise eine Rotordrehzahl ermittelbar ist. Ein Magnetfeldsensor erfasst beispielsweise eine Statorfrequenz und/oder eine Schlupffrequenz.

Die Daten werden zumindest teilweise über eine Netzwerkschnittstelle N an die zentrale IT-Infrastruktur 10 übertragen. Beispielsweise erfolgt die Datenübertragung mittels einer Ethernet-Schnittstelle oder drahtlos über WiFi. Optional wird zumindest ein Teil der Daten, beispielsweise die Seriennummer der Antriebskomponente 4, über ein Lesegerät von einem optisch lesbaren Code eingelesen. Ein optisch lesbarer Code ist beispielsweise ein Barcode, ein QR-Code oder ein Data-Matrix-Code, wobei ein Lesegerät beispielsweise ein Smartphone oder ein Tablet mit einer Kamera ist. Optional umfasst der optisch lesbare Code zumindest einen Teil der Sensordaten und ändert sich dynamisch, sodass der Teil der Sensordaten des optisch lesbaren Codes über das Lesegerät an die zentrale IT-Infrastruktur 10 übertragen wird. Ein dynamisch änderbarer Code ist auf einem Display oder einem ePaper darstellbar.

In der zentralen IT-Infrastruktur 10 wird anhand der übermittelten Seriennummer ein Modell 14 der Antriebskomponente 4, insbesondere automatisch, zugeordnet, wobei die Seriennummer ein individuelles Modell 14 definiert. Ein individuelles Modell 14 der Antriebskomponente 4 ist ein Modell 14, welches dieser speziellen Seriennummer zugeordnet ist und zumindest einen individualisierten technischen Parameter, wie beispielsweise einen Bereich einer Betriebsleistung aufweist.

Dem Modell 14 der Antriebskomponente 4 wird ein Modell 16 einer virtuellen Komponente zugeordnet, wobei die virtuelle Komponente technische Eigenschaften der Lastvorrichtung 6 abbildet. Die Modelle 14, 16 sind in einer Modelldatenbank 18 in der zentralen IT-Infrastruktur 10 hinterlegt und von dort abrufbar. Beispielsweise umfasst das Modell 16 der virtuellen Komponente mindestens eine Pumpenkennlinie der als Pumpe ausgeführten Lastvorrichtung 6. Das Modell 16 der virtuellen Komponente umfasst optional ein der mindestens einen Pumpenkennlinie zugeordnetes Toleranzband. Die Zuordnung der virtuellen Komponente erfolgt beispielsweise manuell durch einen Benutzer oder erfolgt automatisch, beispielsweise anhand in der zentralen IT-Infrastruktur 10 hinterlegter Daten zur Seriennummer.

Mit Hilfe der Sensordaten wird ein Istwert für zumindest einen Betriebsparameter der Antriebskomponente 4 ermittelt. Beispielsweise werden aus von einem Schwingungssensor ermittelten Vibrationsdaten und aus von einem Magnetfeldsensor ermittelten Felddaten eine Drehzahl der als Motor ausgeführten Antriebskomponente 4 sowie ein Drehmoment ermittelt.

Ferner wird für den zumindest einen Betriebsparameter der Antriebskomponente 4 ein Sollwert aus einer Korrelation des Modells 14 der Antriebskomponente 4 und des Modells 16 der virtuellen Komponente ermittelt. Beispielsweise erfolgt eine Korrelation des erforderlichen Drehmoments einer Pumpe in Abhängigkeit einer Drehzahl mit der Drehzahl-Drehmoment-Kennlinie eines Motors, um einen Sollwert für einen Betriebspunkt zu erhalten.

In einer Auswerteeinheit 20 werden aus dem Istwert und Sollwert des zumindest einen Betriebsparameters der Antriebskomponente 4 ein Betriebszustand ermittelt. Die Ermittlung des Betriebszustands erfolgt beispielsweise mit Hilfe zumindest einer Vergleichsoperation. Der Betriebszustand wird an einer Ausgabeeinheit 22 ausgegeben. Eine Ausgabeeinheit 22 ist beispielsweiseeine ein Display. Beispielsweise wird ausgegeben, ob der Motor in einem für die Pumpe zulässigen Betriebszustand arbeitet. Falls nicht, wird eine Fehlermeldung ausgegeben. Optional wird zumindest eine den Betriebszustand der Antriebskomponente 4 kennzeichnende Größe grafisch dargestellt. Beispielsweise wird ein Verlauf eines Drehmoments und/oder einer Drehzahl grafisch auf einem Display dargestellt. Zusätzlich oder alternativ wird der Betriebszustand akustisch oder über mindestens eine LED farblich codiert dargestellt.

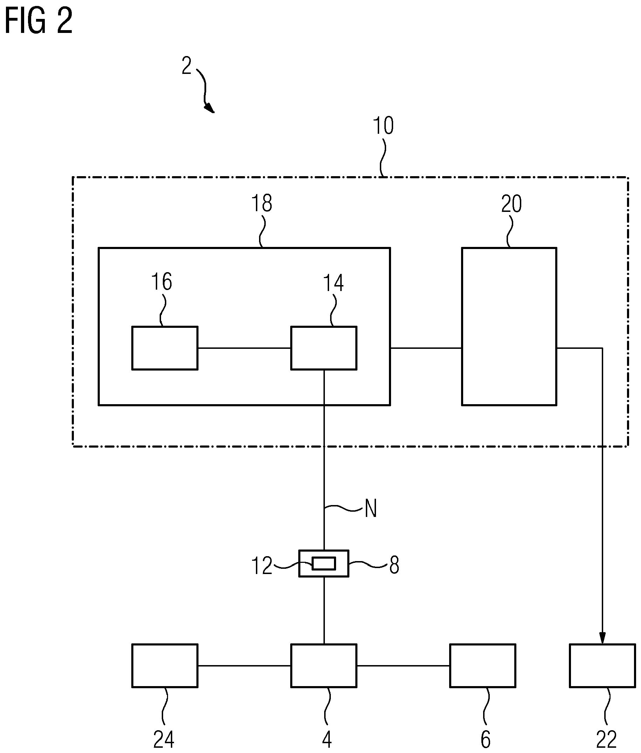

FIG 2 zeigt ein Blockschaltbild einer zweiten Ausführungsform eines Systems 2 zur Überwachung des Betriebes einer Antriebskomponente 4, wobei die Antriebskomponente 4 als Umrichter ausgeführt ist, der über einen Netztransformator 24 gespeist und zur Versorgung der Lastvorrichtung 6 verwendet wird. Die Lastvorrichtung ist beispielsweise ein Motor. Die als Umrichter ausgeführte Antriebskomponente 4 weist, wie in FIG 1, eine Vorrichtung 8 auf, welche Daten, die die Antriebskomponente 4 und/oder einen Betrieb der Antriebskomponente 4 betreffen, an eine zentrale IT-Infrastruktur 10 überträgt. Daten, welche die Antriebskomponente 4 betreffen, umfassen eine individuelle Produktkennzeichnung, beispielsweise eine Seriennummer. Zusätzlich umfassen Daten, welche einen Betrieb der Antriebskomponente 4 betreffen, Sensordaten, welche von zumindest einem Sensor 12 ermittelt werden. Der Sensor 12 ist als Spannungsmessvorrichtung und/oder als Frequenzmessvorrichtung ausgeführt. Wie in FIG 1 werden die Daten zumindest teilweise über eine Netzwerkschnittstelle N an die zentrale IT-Infrastruktur 10 übertragen.

In der zentralen IT-Infrastruktur 10 wird anhand der übermittelten Seriennummer ein Modell 14 des Umrichters, insbesondere automatisch, zugeordnet, wobei durch die Seriennummer ein individuelles Modell 14 definiert wird.

Dem Modell 14 des Umrichters wird ein Modell 16 einer virtuellen Komponente zugeordnet, wobei die virtuelle Komponente technische Parameter des Netztransformators 24, wie beispielsweise ein, insbesondere komplexes, Übersetzungsverhältnis und/oder einen, insbesondere vom Ausgangsstrom abhängigen, Wirkungsgrad abbildet. Die Zuordnung der virtuellen Komponente erfolgt beispielsweise manuell durch einen Benutzer oder erfolgt automatisch, beispielsweise anhand in der zentralen IT-Infrastruktur 10 hinterlegter Daten zur Seriennummer.

Mit Hilfe der Sensordaten wird ein Istwert für zumindest einen Betriebsparameter der als Umrichter ausgeführten Antriebskomponente 4 ermittelt. Beispielsweise wird ein Istwert für mindestens einen Lastpunkt aus einer Zwischenkreisspannung und einem Eingangsstrom des Umrichters ermittelt.

Darüber hinaus wird für den zumindest einen Betriebsparameter der als Umrichter ausgeführten Antriebskomponente 4 ein Sollwert aus einer Korrelation des Modells 14 der Antriebskomponente 4 und des Modells 16 der virtuellen Komponente ermittelt. Beispielsweise wird ein Sollwert für den mindestens einen Lastpunkt anhand von Modellparametern des Modells 14 des Umrichters und des Modells 16 des Netztransformators 24 ermittelt.

In einer Auswerteeinheit 20 werden aus dem Istwert und dem Sollwert ein Betriebszustand ermittelt. Der Betriebszustand wird an einer Ausgabeeinheit 22 ausgegeben. Beispielsweise wird ausgegeben, ob der Umrichter fehlerhaft arbeitet und/oder eine Anomalie des Netztransformators 24 vorliegt. Falls dies der Fall ist, wird beispielsweise eine Fehlermeldung ausgegeben. Die weitere Ausgestaltung des Systems 2 in FIG 2 entspricht der in FIG 1.

Zusammenfassend betrifft die Erfindung ein Verfahren zur Überwachung des Betriebes mindestens einer Antriebskomponente 4. Um die Schnelligkeit und Sicherheit der Überwachung zu verbessern wird vorgeschlagen, dass Daten, welche die mindestens eine Antriebskomponente 4 und/oder einen Betrieb der mindestens einen Antriebskomponente 4 betreffen, an eine zentrale IT-Infrastruktur 10 übertragen werden, wobei die übertragenen Daten innerhalb der zentralen IT-Infrastruktur 10 einem Modell 14 der mindestens einen Antriebskomponente 4 zugeordnet werden, wobei dem Modell 14 der mindestens einen Antriebskomponente 14 ein Modell 16 mindestens einer virtuellen Komponente zugeordnet wird, wobei mit Hilfe der Modelle 14, 16 ein Betriebszustand der Antriebskomponente 4 ermittelt wird.

## Patentansprüche

1. Verfahren zur Überwachung des Betriebes mindestens einer Antriebskomponente (4),
wobei Daten, welche die mindestens eine Antriebskomponente (4) und/oder einen Betrieb der mindestens einen Antriebskomponente (4) betreffen, an eine zentrale IT-Infrastruktur (10) übertragen werden,
wobei die übertragenen Daten innerhalb der zentralen IT-Infrastruktur (10) einem Modell (14) der mindestens einen Antriebskomponente (4) zugeordnet werden,
wobei dem Modell (14) der mindestens einen Antriebskomponente (14) ein Modell (16) mindestens einer virtuellen Komponente zugeordnet wird,
wobei mit Hilfe der Modelle (14, 16) ein Betriebszustand der Antriebskomponente (4) ermittelt wird.

2. Verfahren nach Anspruch 1,
wobei die Daten, welche die mindestens eine Antriebskomponente (4) betreffen, eine individuelle Produktkennzeichnung umfassen.

3. Verfahren nach Anspruch 2,
wobei das Modell (14) der mindestens einen Antriebskomponente (4) anhand der individuelle Produktkennzeichnung automatisch zugeordnet wird.

4. Verfahren nach einem der vorherigen Ansprüche,
wobei bei der Ermittlung des Betriebszustandes der Antriebskomponente (4) zumindest eine Kennlinie verwendet wird.

5. Verfahren nach einem der vorherigen Ansprüche,
wobei zumindest ein Teil der Daten, welche den Betrieb der mindestens einen Antriebskomponente (4) betreffen, von zumindest einem Sensor (12) ermittelt werden.

6. Verfahren nach Anspruch 5,
wobei vom zumindest einen Sensor (12) eine Temperatur, eine Schwingung und/oder ein Magnetfeld gemessen werden.

7. Verfahren nach einem der Ansprüche 5 oder 6,
wobei anhand der Daten des zumindest einen Sensors (12) ein Istwert für zumindest einen Betriebsparameter ermittelt wird, wobei anhand einer Korrelation der Modelle (14, 16) ein Sollwert für den zumindest einen Betriebsparameter ermittelt wird,
wobei aus dem Sollwert und dem Istwert des zumindest einen Betriebsparameters ein Betriebszustand der Antriebskomponente (4) ermittelt wird.

8. Verfahren nach Anspruch 7,
wobei der Betriebszustand der Antriebskomponente (4) mit Hilfe zumindest einer Vergleichsoperation ermittelt wird.

9. Verfahren nach einem der vorherigen Ansprüche,
wobei mindestens eine Antriebskomponente (4) als elektrische rotierende Maschine ausgeführt ist,
wobei die Daten, welche den Betrieb der mindestens einen elektrischen rotierenden Maschine betreffen, zumindest eine Drehzahl und/oder ein Drehmoment umfassen.

10. Verfahren nach einem der vorherigen Ansprüche,
wobei mindestens eine Antriebskomponente (4) als Umrichter ausgeführt ist,
wobei die Daten, welche den Betrieb des mindestens einen Umrichters betreffen, zumindest eine Zwischenkreisspannung und/oder einen Eingangsstrom des Umrichters umfassen.

11. Verfahren nach einem der vorherigen Ansprüche,
wobei die Daten zumindest teilweise von einem optisch lesbaren Code eingelesen werden.

12. Verfahren nach einem der vorherigen Ansprüche,
wobei die Daten zumindest teilweise über eine Netzwerkschnittstelle (N) an die zentrale IT-Infrastruktur (10) übertragen werden.

13. Verfahren nach einem der vorherigen Ansprüche,
wobei zumindest eine den Betriebszustand der Antriebskomponente (4) kennzeichnende Größe grafisch dargestellt wird.

14. System (2) zur Überwachung des Betriebes mindestens einer Antriebskomponente (4) aufweisend
- eine Vorrichtung (8) zur Übertragung von Daten, welche die mindestens eine Antriebskomponente (4) und/oder einen Betrieb der mindestens einen Antriebskomponente (4) betreffen, an eine zentrale IT-Infrastruktur (10),
- ein Modell (14) der mindestens einen Antriebskomponente (4) innerhalb der zentralen IT-Infrastruktur (10), welchem die übertragenen Daten der mindestens einen Antriebskomponente (4) zugeordnet sind,
- ein Modell (16) mindestens einer virtuellen Komponente, welches dem Modell (14) der mindestens einen Antriebskomponente (4) zugeordnet ist und
- eine Auswerteeinheit (20), die dafür vorgesehen ist mit Hilfe der Modelle (14, 16) einen Betriebszustand der Antriebskomponente (4) zu ermitteln.

15. System (2) nach Anspruch 14,
wobei die Daten, welche die mindestens eine Antriebskomponente (4) betreffen, eine individuelle Produktkennzeichnung umfassen.

16. System (2) nach einem der Ansprüche 14 oder 15,
wobei zumindest eines der Modelle (14, 16) eine Kennlinie umfasst.

17. System (2) nach einem der Ansprüche 14 bis 16,
umfassend zumindest einen Sensor (12) zur Ermittlung zumindest eines Teils der Daten, welche den Betrieb der mindestens einen Antriebskomponente (4) betreffen.

18. System (2) nach einem der Ansprüche 14 bis 17,
wobei der zumindest eine Sensor (12) als ein Temperatursensor, ein Schwingungssensor und/oder als ein Magnetfeldsensor ausgeführt ist.

19. System (2) nach einem der Ansprüche 14 bis 18,
wobei mindestens eine Antriebskomponente (4) als elektrische rotierende Maschine ausgeführt ist,
wobei die Daten, welche den Betrieb der mindestens einen elektrischen rotierenden Maschine betreffen, zumindest eine Drehzahl und/oder ein Drehmoment umfassen.

20. System (2) nach einem der Ansprüche 14 bis 19,
wobei mindestens eine Antriebskomponente (4) als Umrichter ausgeführt ist,
wobei die Daten, welche den Betrieb des mindestens einen Umrichters betreffen, zumindest eine Zwischenkreisspannung und/oder einen Eingangsstrom des Umrichters umfassen.

21. System (2) nach einem der Ansprüche 14 bis 20,
wobei mindestens eine Antriebskomponente (4) einen optisch lesbaren Code aufweist, welcher zumindest ein Teil der übertragbaren Daten enthält.

22. System (2) nach einem der Ansprüche 14 bis 21, aufweisend eine Netzwerkschnittstelle (N), über welche zumindest ein Teil der Daten an die zentrale IT-Infrastruktur (10) übertragbar sind.

23. Computerprogramm zur Durchführung eines Verfahrens nach einem der Ansprüche 1 bis 14 bei Ablauf in einer zentrale IT-Infrastruktur (10).

24. Computerprogrammprodukt mit einem Computerprogramm nach Anspruch 23.
